Europäisches Patentamt

European Patent Office

Office européen des brevets

(19)

(11) Publication number: **0 162 683**
**B1**

(12) **EUROPEAN PATENT SPECIFICATION**

(45) Date of publication of patent specification: **21.03.90**

(51) Int. Cl.⁵: **G 02 B 21/00, G 01 N 21/88**

(21) Application number: **85303515.2**

(22) Date of filing: **20.05.85**

(54) A method for observing an object in a small gap and an apparatus for the same.

(30) Priority: **22.05.84 JP 104249/84**

(43) Date of publication of application:
**27.11.85 Bulletin 85/48**

(45) Publication of the grant of the patent:
**21.03.90 Bulletin 90/12**

(84) Designated Contracting States:
**DE FR GB**

(56) References cited:
**DE-A-1 113 100**
**DE-C-1 058 749**
**US-A-3 922 097**
**US-A-4 028 728**
**US-A-4 268 169**
**US-A-4 389 669**

**IBM TECHNICAL DISCLOSURE BULLETIN, vol.
13, no. 7, December 1970, pages 2115, 2116, New
York, US; W.J. SCHUELKE: "Integrated circuit
chip positioning tool"**

(73) Proprietor: **FUJITSU LIMITED**
**1015, Kamikodanaka Nakahara-ku**
**Kawasaki-shi Kanagawa 211 (JP)**

(72) Inventor: **Ando, Moritoshi c/o Fujitsu Limited**
**Patent Department 1015, Kamikodanaka**
**Nakahara-ku Kawasaki-shi Kanagawa 211 (JP)**

(74) Representative: **Sunderland, James Harry et al**
**HASELTINE LAKE & CO Hazlitt House 28**
**Southampton Buildings Chancery Lane**
**London WC2A 1AT (GB)**

EP 0 162 683 B1

## Description

This invention relates to a method and apparatus for observing an object in a small gap.

The increase in the number of electrical connections between a circuit board such as a printed circuit board (PCB) and integrated circuit (IC) packages mounted thereon is a result of the trend toward large scale integration in IC packages.

The most popular packaging technology for conventional ICs is that known as DIP (dual inline package) or its equivalents, in which each lead is formed to extend from the side surface of an IC package. However, the largest number of leads formed on each such IC package is as many as 64, for example, at present, and it is difficult to envisage a large increase in the number of leads, to 100 or more, in the future.

Most of the effort to overcome the limitation of the maximum number of leads available in conventional ICs has concentrated upon use of the back side surface of the package. An exemplary packaging technology is proposed in Provisional Publication —Tokkaisho 59—151443— published August 29, 1984, as a Japanese patent application (corresponding to United States patent application, Serial 579,127, filed February 10, 1984). According to the technology of this application, leads, i.e. conductor pins, as many as 200 or more, are provided for conductor pads formed on the back side surface of an IC package in a substantially vertical condition (disposition). The IC package is placed on a circuit board so that the tips of the conductor pins contact corresponding conductor pads in the wiring pattern on the circuit board, then, the conductor pins are connected to the wiring pattern pads by a soldering technique. This type of packaging technology is also advantageous for increasing the packing density of ICs on a circuit board.

Circuit boards mounting ICs thereon — sometimes referred to as cards — are generally subjected to a visual inspection of the soldered condition (condition of the soldered connection) between each of the pins and the corresponding pads, prior to being subjected to electrical functional tests. Visual inspection is important for eliminating latent faults of the cards due to poor soldered conditions (poorly soldered connections), because such faults sometimes become apparent in field operation of a system comprising the cards.

However, the conventional visual inspection procedure for inspecting soldered condition is not applicable to a card comprising ICs fabricated according to a packaging technology as disclosed in the above application, because each soldered portion is hidden under the package and cannot be observed directly either from the top side or from the back side of the circuit board. In a card comprising conventional ICs of DIP type, for example, soldered conditions can be examined by observing each corresponding through-hole on the back side surface of a card. Accordingly, introduction of a new inspecting method is a crucial requirement for enabling the use of ICs based on the above described packaging technology.

US—A—4,389,869 discloses a system for inspecting miniaturized solid-state devices, in particular hybrid devices, in which two hybrid devices are placed side by side in carriers received in a specially-machined tooling plate. The tooling plate is located on an XY table allowing independent movement in X and Y directions. The tooling plate is positioned under two stereoscopic microscopes so that each can view one of the hybrid devices, and annular shaped light sources directly illuminate the hybrid devices from above.

An article in IBM T.D.B. Vol. 13, No. 7 (December 1970) by W.J. Schuelke discloses an integrated circuit (chip) positioning tool. A chip is first placed in rough position on a mirror, and an operator views the reflected image, in the mirror, of the chip through a microscope. The microscope is combined with a deflection system, for selecting one of two alternative viewing positions and for illuminating the chip. The operator adjusts the position of the chip to coincide with referenced cross hairs of the microscope, then the vacuum pickup lifts the chip off the mirror, transports it and positions it on a substrate, the latter step being checked by the operator after the deflection system switches to view the substrate.

US—A—3,922,097 discloses a device for mounting on a microscope, used for examining the walls of small holes. The device includes a number of mirrors located within a mount and inclined relative to a common central axis, and is positioned above the hole whose wall is to be examined. The hole is illuminated directly from below.

US—A—4,268,169 discloses a device for examining the walls of holes, in particular plated through holes in a circuit board. The board is carried on a platform having a hole aligned with the plated through hole to be examined. A microscope is positioned above the plated through hole, and the hole is illuminated directly from above using a ring light around the end of the microscope. A probe having an oblique-angled mirror at its end is inserted into the plated through hole from below and rotated so as to reflect light up to the microscope from all around the surrounding hole wall.

All of the above cited documents use direct illumination of the objects being inspected. This leads to the problem that shadows of the object are inevitably generated. In the case of inspecting an array of rear-mounted IC pins, the view obtained using direct illumination is very confusing to the eye, making inspection difficult.

Conventional circuit boards transmit light, albeit with a large attenuation; that is, conventional circuit boards are included in the class of light transmissive circuit boards. However, this fact has not been realised or utilised in the prior art.

According to one aspect of the present invention, there is provided a method of inspecting a connection portion between a semiconductor device and a circuit board disposed in a small gap between respective generally flat inner surfaces of the circuit board and a package of the device, comprising steps of:

illuminating the outer surface of the circuit board with a flood of light, such that some light penetrates the board to produce diffused light within the gap which illuminates the connection portion and is emitted from an edge of the gap;

deflecting the light emitted through the edge of the gap, in a direction at an angle to the plane of the gap;

focusing the light emitted through the edge of the gap, to form an image of the connection portion; and

viewing or processing the image so as to inspect the connection portion.

According to a second aspect of the present invention, there is provided an apparatus for inspecting a connection portion between a semiconductor device and a circuit board disposed in a small gap between respective generally flat inner surfaces of the circuit board and a package of the device, comprising:

illuminating means arranged to illuminate the outer surface of the circuit board with a flood of light, such that some light penetrates the board to produce diffused light within the gap which illuminates the connection portion and is emitted from an edge of the gap;

deflecting means arranged to deflect the light emitted through the edge of the gap, in a direction at an angle to the plane of the gap; and

focusing means arranged to focus the light emitted through the edge of the gap to form an image of the or each object for use in inspecting the connection portion.

An embodiment of the present invention can thus provide a method and apparatus applicable to the inspection of a solder condition between conductor pads in the wiring on a circuit board and conductor pins of an IC mounted thereon.

Reference is made, by way of example, to the accompanying drawings, wherein:

Fig. 1A is a cross-sectional view of an exemplary structure of an IC package as disclosed in the above referred United States patent application Serial No. 579,127;

Fig. 1B is a plan view illustrating the back side surface of an IC package as shown in Fig. 1A;

Fig. 2 is a partially cutaway perspective view illustrating an IC package as shown in Fig. 1A mounted on a circuit board;

Figs. 3A, 3B, 3C are sketches of enlarged microscopic cross-sections each showing soldered conditions between a conductor pin of the IC package as shown in Fig. 1A and a conductor pad formed on a circuit board;

Fig. 4 is a schematic configuration for explaining the principle of a method for observing soldered portions of conductor pins of an IC package on a circuit board according to the present invention;

Fig. 5 is a partially cutaway perspective view of an observing apparatus according to an embodiment of the present invention;

Fig. 6A is a partial vertical sectional view showing an exemplary method for obtaining an appropriate visual angle;

Fig. 6B is a perspective view showing setting of a jig to an IC package to conduct observation under a condition explained with reference to Fig. 6A;

Figs. 7A and 7B are perspective and sectional views, respectively, of means for varying a visual angle to objects; and

Figs. 8A and 8B are illustrations of objects observed with different visual angles provided by the means explained with reference to Figs. 7A and 7B.

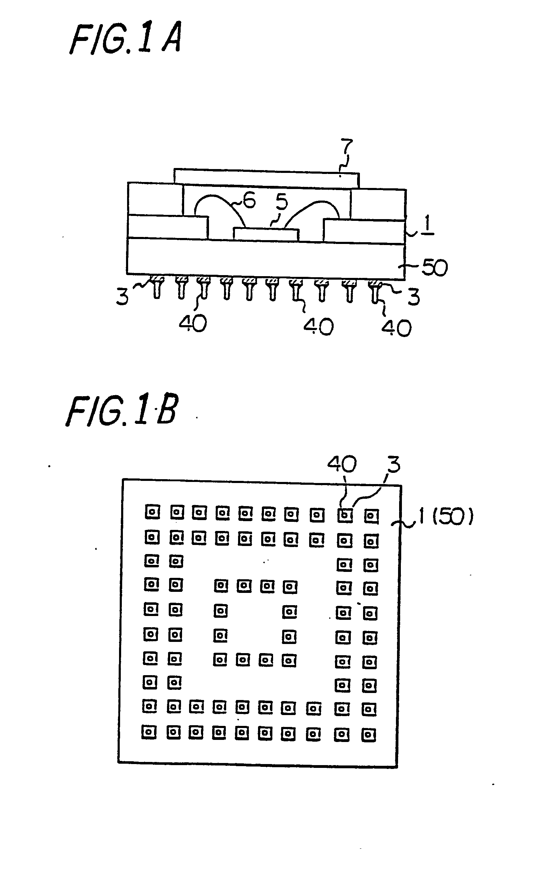

Before describing the preferred embodiments of the invention, some explanation will be made of the packaging technology disclosed in the above mentioned United States patent application with reference to Figs. 1A and 1B.

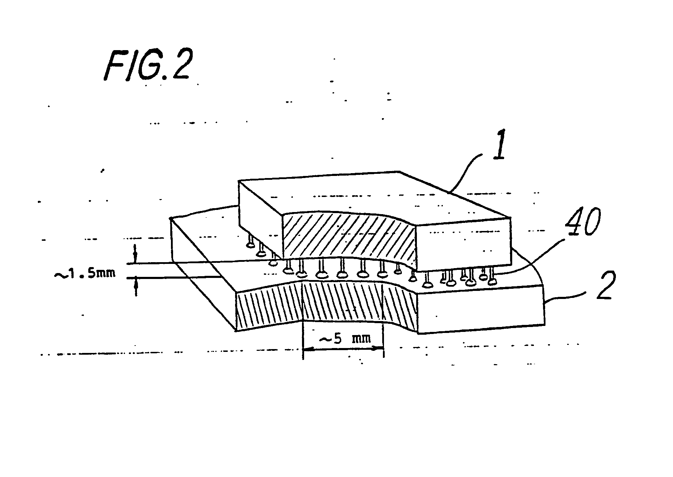

The parameters which must be taken into account in observation of the soldered portion of each conductor pin of such an IC package as shown in Fig. 1A on a circuit board, will be explained with reference to Fig. 2.

Fig. 1A is a cross-sectional view of an exemplary structure of an IC package as disclosed in the above referred United States patent application. In Fig. 1A, a package 1 accommodating a semiconductor chip 5 comprises a substrate 50 and a cap 7. On the back side surface of the package 1, i.e. the surface of the substrate 50, are formed a plurality of conductor pads 3 of a metallized layer. The conductor pads 3 are generally in a matrix arrangement as shown in Fig. 1B, which is a plan view illustrating the back side surface of an IC package as shown in Fig. 1A, and are connected to corresponding terminals (not shown) formed on the periphery of the chip 5 via lead wires 6. To each of the conductor pads 3, a conductor pin 40 is connected using a brazing technique, under a substantially vertical contact condition. Thus, a number of conductor pins 40, as many as 250 or more, are formed as outer leads of an IC package.

Fig. 2 is a partially cutaway perspective view illustrating an IC package 1 as shown in Fig. 1A mounted on a circuit board 2. Referring to Fig. 2, the IC package 1 is placed on the circuit board 2 so that the tip of each conductor pin 40 contacts a corresponding conductor pad of a wiring pattern (not shown) on the circuit board 2. On the surface of each of the conductor pads on the circuit board 2, a layer of solder is provided in advance. When heat is applied by blowing hot air, for example, the solder at each conductor pad melts and spreads upward to wet the surface of the conductor pin 40, and an electrical bonding is thus formed between the conductor pin 40 and the wiring on the circuit board 1. The conductor pins 40, each having a length for example of 1.5 mm, are arranged with a pitch of about 1.25 mm. As shown in Fig. 2, the gap between the IC package 1 and the circuit board 2 is about 1.5 mm for example, and five rows of the conductor pins 40 may be arranged in a zone width of about 5 mm along each side of the package 1.

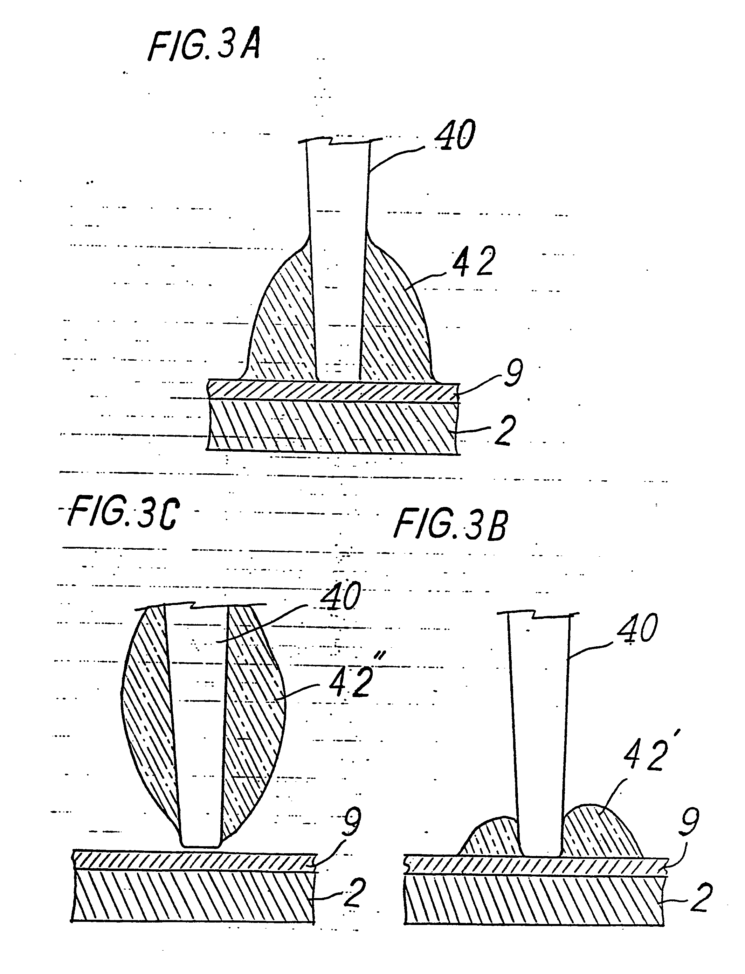

Figs. 3A, 3B and 3C are sketches of enlarged microscopic cross-sections each showing soldered conditions (conditions of soldered connections) between a conductor pin 40 and a conductor pad 9 on a circuit board 2. Fig. 3A illustrates a desirable soldered condition, wherein the solder layer formed on the conductor pad 9 on the circuit board 2 wets well the surface of the conductor pin 40, hence resulting in a bell-shaped profile 42. On the other hand, if the solder does not wet well the surface of the conductor pin 40, that is, the solder contacts the surface of the conductor pin 40 with a large contact angle, there results a double-humped profile 42' as shown in Fig. 3B. Further, if the solder wets well the surface of the conductor pin 40 but does not wet well the conductor pad 9, there results a profile like a spindle 42'' hanging on the conductor pin 40 as shown in Fig. 3C, wherein the electrical bonding between the conductor pin 40 and the pad 9 sometimes fails.

As mentioned before, the electrical connection achieved under a poor soldered condition as shown in Fig. 3B or 3C sometimes becomes the cause of faulty operation of a card in the field, even if no problems were revealed during factory tests. Hence, observation of soldered conditions has significant value for eliminating latent faults due to poor soldering.

The present invention is intended to allow inspection of the soldered condition of each conductor pin 40 and the corresponding conductor pad 9 by means of observing the profile of each soldered portion as illustrated in Figs. 3A, 3B and 3C. The observation must be performed from the gap between an IC package 1 and the circuit board 2 as shown in Fig. 2, because of the reason described above.

A present requirement for the inspection is that the observation should cover conductor pins arranged in a zone of 5 mm along each side of the IC package.

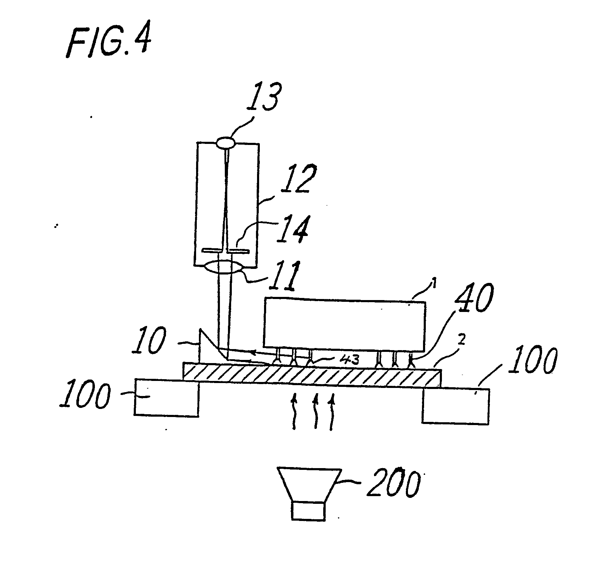

Fig. 4 is a schematic configuration for explaining the principle of a method for observing soldered portions according to the present invention. Referring to Fig. 4, a card comprising an IC package 1 and a light transmissive (i.e. not completely opaque) circuit board 2 is placed on a table 100. When the bottom surface (underside) of the circuit board 2 is illuminated by a flood of light provided by a light source 200 through an opening in the table 100, light transmitted through the circuit board 2 is scattered in the gap between the IC package 1 and the circuit board 2, and then emitted from the edge of the gap, as indicated by the arrow lines. The emitted light is deflected upward by a deflecting means 10, a prism, for example. The light deflected by the deflecting means 10 is collected and focused by a focusing means 11 to form an image of a soldered portion 43. In Fig. 4, references 12, 13 and 14 designate a lens-barrel, an eye-piece and an iris diaphragm, respectively. For example, the aperture diameter of the iris diaphragm 14 is selected to be approximately 2 mm for obtaining a focusing depth of 5 mm necessary for covering five conductor pins arranged in line to be observed at once.

The illuminating method shown in Fig. 4 gives a more successful result than other illuminating methods based on direct illumination of soldered portions from the gap using a flood of light or a scanned laser beam. The latter two methods have the following disadvantages: (1) the strong halation at the unsoldered portion of the surface of a conductor pin 40 decreases the contrast of the soldered portions; (2) the rate of decrease of illumination intensity at conductor pins further from the light source is greater than that determined by the reciprocal square-law of distance from the light source, because of the occulation effect of conductor pins nearer to the edge of the gap. By contrast, according to the method of the present invention, the soldered portions to be observed are illuminated substantially uniformly by scattered light in the gap.

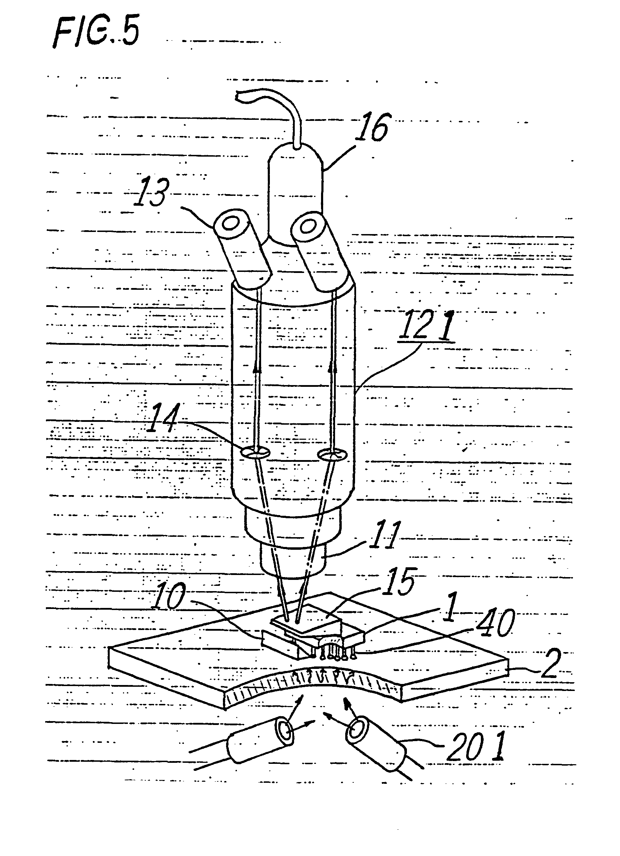

Fig. 5 is a partially cutaway perspective view of an observing apparatus according to an embodiment of the present invention. In Fig. 5, halogen lamps 201 are preferably employed as the illuminating means 200 of Fig. 4, because their spectral distribution matches the spectral transmission of the light transmissive circuit board 2. Two halogen lamps of 100 watts, for example, may be used to obtain an illuminance of 400,000 lux on the backside surface of the circuit board 2. As a long focal optical system capable of imaging conductor pins in five rows (ranging in distance by 5mm) simultaneously, a stereoscopic microscope 121 may be used as the focusing means 11. In a practical observing apparatus, another prism 15, which provides a means for varying a visual angle to a soldered portion, is placed in the light path between the prism 10 and the stereoscopic microscope 121. (The details of the prisms 10 and 15 will be described later with reference to relevant Figures.)

With the apparatus shown in Fig. 5, the images of soldered portions in the gap between the IC package 1 and circuit board 2 can be observed even when a number of other IC packages are mounted on the circuit board 2, provided there is a little space for accommodating the prism 10 between adjacent IC packages. The image of a soldered portion is observed through the eye-pieces 13. The image can be projected on to a photoelectric transducer of a video camera 16, thereby enabling it to be displayed on a video terminal, if necessary.

Fig. 6A is a partial vertical sectional view showing an exemplary method for obtaining an appropriate visual angle. To observe the full profile of, for example, the soldered portion 43 of the fifth pin (a pin in a fifth row), at a distance of about 6 mm from the edge of the 1.5 mm — gap between the IC package 1 and circuit board 2, the light emitted from the pin must enter the reflecting surface of the prism 10 with an angle of

elevation θ. The value of θ has been empirically determined as 5°, and it is desired that (so that) the light is reflected upward substantially perpendicularly to the surface of the circuit board 2. Therefore, the reflecting surface of the prism 10 is provided with an angle of inclination ɸ = 42.5°, with respect to the surface of the circuit board 2.

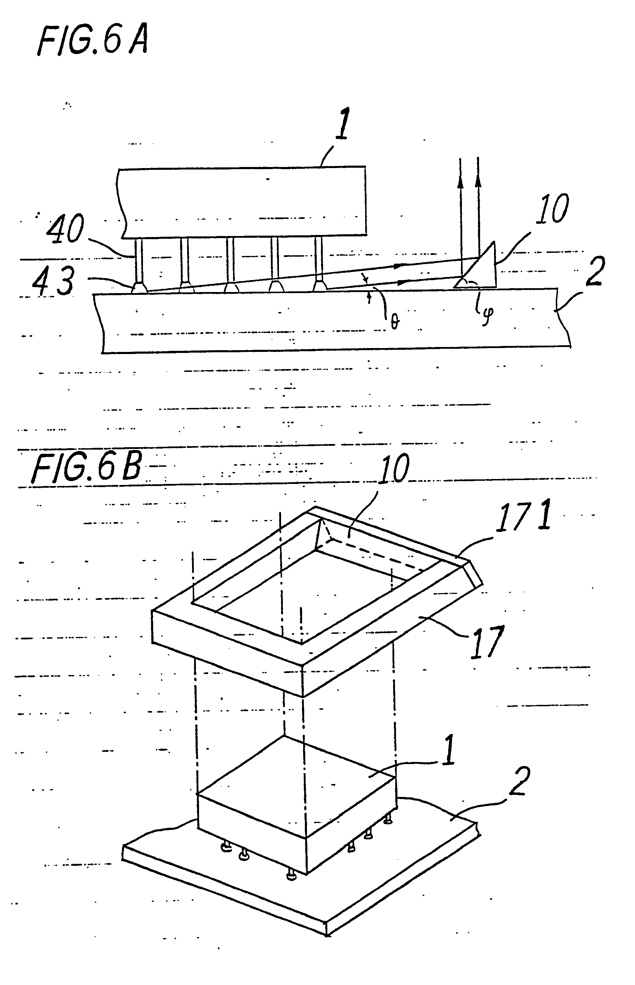

Fig. 6B is a perspective view showing setting of a jig to an IC package to conduct observation under the condition explained with reference to Fig. 6A. The prism 10 may be combined with a frame 17 through a supporting plate 171 backing up the prism 10. The frame 17 forms a rectangular opening in conjunction with the prism 10, and may be placed on the circuit board 2 so that the IC package 1 is engaged in the opening, whereby the frame 17 is placed in contact with the package 1 with its inner side surface opposite to the prism 10. In this way the relative position of the prism 10 with respect to the package 1 can be kept constant.

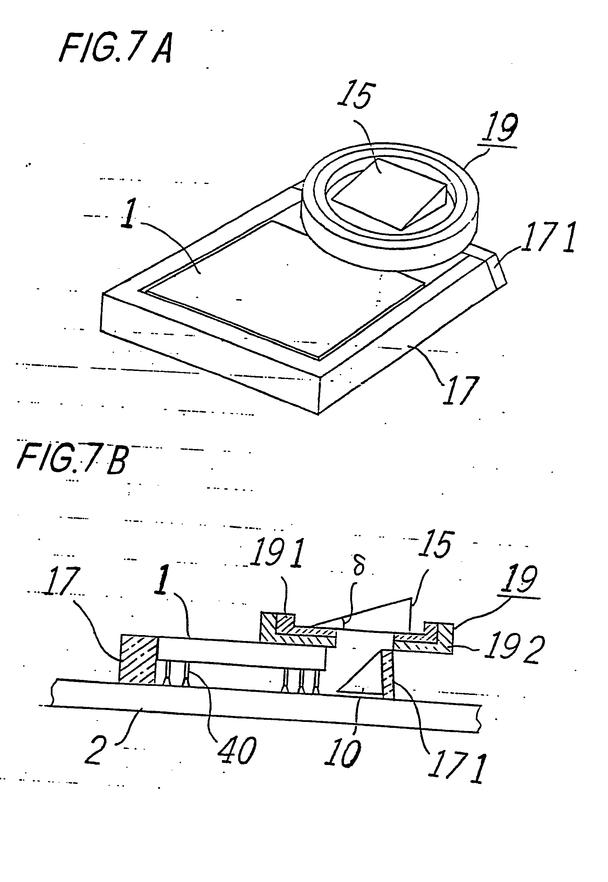

Figs. 7A and 7B are perspective and sectional views, respectively, of a means for varying the visual angle to objects. A case may arise wherein a conductor pin is hidden behind another conductor pin and can not be observed separated from others. The visual angle to conductor pins 40 arranged in line can be changed by moving the circuit board 2 with respect to the focusing means 11 using a table 100 (see Fig. 4). However, fine control is required for providing a necessary amount of displacement of the circuit board 2, and this can greatly decrease operation speed. Therefore, it is advantageous that the visual angle to the conductor pins 40 can be varied without providing a change in the relative position between the IC package 1 and the circuit board 2.

For this purpose, another deflecting means, a prism 15, for example, may be placed between the prism 10 and the focusing means 121 (see Fig. 5). The prism 15 has a pair of planes facing each other with an angle δ of, for example, 5° between them and intersecting (intercepting) the path of the light reflected by the prism 10. A prism holder 19 comprises an inner ring 191 on which the prism 15 is fixed. The inner ring 191 can revolve in an outer shell 192. Therefore, when the inner ring 191 is revolved together with the prism 15, the outgoing direction of the light from the prism 15 varies. In other words, the source of the incoming light to the focusing means changes with revolution of the prism 15. This enables a previously hidden soldered portion to be observed separated from other soldered portions.

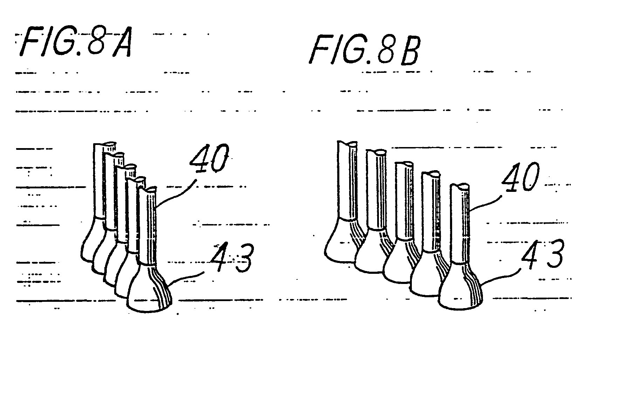

The effect of the deflecting means 15 is illustrated in Figs. 8A and 8B. Each of Figs. 8A and 8B shows a respective one of the soldered portions 43 of the conductor pins 40 each belonging to one of five rows of conductor pins arranged along the edge of an IC package. In Fig. 8A, which represents a view taken without the prism 15, the profile of each soldered portion 43 cannot be observed as a separate profile. However, in Fig. 8B, which represents a view taken with the prism 15, separation of the profile of each soldered portion 43 is achieved to a satisfactory degree.

There has been disclosed above an observing method and apparatus for inspecting soldered conditions between wiring of a circuit board and conductor pins of an IC package mounted thereon. The back side surface of the circuit board is illuminated by a flood of light; thus diffused light is generated in the gap between the circuit board and the IC package and emitted from the edge of the gap. The emitted light is deflected by a small prism placed along the edge of the gap, then enters into a focusing means such as a steroscopic microscope, having a long focal distance and an optical axis directed substantially perpendicular to the surface of the circuit board. Images of the soldered portions can be observed through the eye-piece of the microscope, or displayed on a video screen when the optical images are projected onto a photoelectric transducer such as a video camera.

Although the invention has been described in its preferred form with a certain degree of particularity, it will be understood that the present disclosure of the preferred form may be changed in the details of construction, and the combination and arrangement of parts may be altered without departing from the scope of the invention as hereinafter claimed.

## Claims

1. A method of inspecting a connection portion (40) between a semiconductor device (1) and a circuit board (2) disposed in a small gap between respective generally flat inner surfaces of the circuit board (2) and a package of the device (1), comprising steps of:

illuminating the outer surface of the circuit board (2) with a flood of light, such that some light penetrates the board (2) to produce diffused light within the gap which illuminates the connection portion and is emitted from an edge of the gap;

deflecting the light emitted through the edge of the gap, in a direction at an angle to the plane of the gap;

focusing the deflected light emitted through the edge of the gap, to form an image of the connection portion; and

viewing or processing the image so as to inspect the connection portion.

2. A method as set forth in claim 1, wherein said angle to the plane of the gap is substantially a right angle.

3. A method as set forth in any preceding claim, wherein the focusing step includes optically magnifying said image.

4. A method as set forth in any preceding claim, wherein said image is formed on a photo-sensitive surface of a photo-electric transducer (16) capable of providing electrical signals corresponding to said image.

5. A method as set forth in any preceding claim, further comprising a step of an additional deflection of said deflected light.

6. A method as set forth in any preceding claim, further comprising a step of translating the circuit board (2) and device (1) in a direction parallel to the edge of said gap.

7. A method as set forth in any preceding claim, wherein the connection portion (40) is a soldered portion of an outer conductor lead of the semiconductor device package, mounted on said circuit board (2).

8. An apparatus for inspecting a connection portion (40) between a semiconductor device (1) and a circuit board (2) disposed in a small gap between respective generally flat inner surfaces of the circuit board (2) and a package of the device ·(1), comprising:

illuminating means (200, 201) arranged to illuminate the outer surface of the circuit board (2) with a flood of light, such that some light penetrates the board (2) to produce diffused light within the gap which illuminates the connection portion (40) and is emitted from an edge of the gap;

deflecting means (10) arranged to deflect the light emitted through the edge of the gap, in a direction at an angle to the plane of the gap; and focusing means (11) arranged to focus the deflected light emitted through the edge of the gap to form an image of the or each object (40) for use in inspecting the connection portion.

9. An apparatus as set forth in claim 8, wherein said deflecting means (10) is a prism having a plane capable of reflecting said emitted light.

10. An apparatus as set forth in claim 8 or 9, wherein said focusing means (11) is an optical microscope.

11. An apparatus as set forth in claim 8, 9 or 10, further comprising additional deflecting means (15) for providing an additional deflection for said deflected light so as to change a visual angle to said connection portion (40).

12. An apparatus as set forth in claim 11, wherein said additional deflecting means (15) includes:

a prism having a pair of surfaces intersecting the path of light deflected by said deflecting means (10), respective said surfaces facing each other with a predetermined angle in between; and

means (19) for rotating said prism around an axis substantially perpendicular to said inner surface of said first member (2).

13. An apparatus as set forth in any of claims 8 to 12, further comprising a converting means (16) for converting said focused light into electrical signals.

14. An apparatus as set forth in claim 13, wherein said converting means (16) is a video camera.

15. An apparatus as set forth in any of claims 8 to 14, in combination with an assembly comprising

said circuit board (2) and semiconductor device (1) mounted thereon, defining the small gap between the respective inner surfaces thereof, and

one connection portion or a plurality of connection portions (40) disposed in the small gap.

16. An apparatus as set forth in claim 15, wherein the or each connection portion (40) is a soldered portion of an outer conductor lead of the semiconductor device package (1) mounted on said circuit board (2).

17. An apparatus as set forth in any of claims 8 to 16, wherein said illuminating means (200, 201) comprises a bright light source whose radiated light has a spectral distribution matching the spectral transmission of the circuit board (2).

18. An apparatus as set forth in claim 17, wherein said illuminating means (200, 201) comprises a halogen lamp.

**Patentansprüche**

1. Verfahren zum Inspizieren eines Verbindungsabschnittes (40), zwischen einer Halbleitervorrichtung (1) und einer Schaltungskarte (2), der in einem kleinen Spalt zwischen jeweils im allgemeinen flachen inneren Oberflächen der Schaltungskarte (2) und einer Packung der Vorrichtung (1) vorgesehen ist, mit den folgenden Schritten:

Beleuchten der äußeren Oberfläche der Schaltungskarte (2) mit einem Flutlicht, so daß etwas Licht die Karte (2) durchdringt, um innerhalb des Spaltes diffuses Licht zu erzeugen, welches den Verbindungsabschnitt beleuchtet und von einem Rand des Spaltes emittiert wird;

Ablenken des Lichtes, welches durch den Rand des Spaltes emittiert wird, in einer Richtung in einem Winkel zu der Ebene des Spaltes;

Fokussieren des abgelenkten Lichtes, welches durch den Rand des Spaltes emittiert wird, um ein Bild des Verbindungsabschnittes zu bilden; und

Betrachten oder Verarbeiten des Bildes, um so den Verbindungsabschnitt zu inspizieren.

2. Verfahren nach Anspruch 1, bei dem der genannte Winkel zu der Ebene des Spaltes im wesentlichen ein rechter Winkel ist.

3. Verfahren nach einem der vorhergehenden Ansprüche, bei dem der Schritt des Fokussierens die optische Vergrößerung des genannten Bildes einschließt.

4. Verfahren nach einem der vorhergehenden Ansprüche, bei dem das genannte Bild auf einer lichtempfindlichen Oberfläche eines photoelektrischen Wandlers (16) gebildet wird, der fähig ist, elektrische Signale zu liefern, welche dem genannten Bild entsprechen.

5. Verfahren nach einem der vorhergehenden Ansprüche, ferner mit einem Schritt einer zusätzlichen Ablenkung des abgelenkten Lichtes.

6. Verfahren nach einem der vorhergehenden Ansprüche, ferner mit einem Schritt der Versetzung der Schaltungskarte (2) und der Vorrichtung (1) in einer Richtung parallel zu dem Rand des genannten Spaltes.

7. Verfahren nach einem der vorhergehenden Ansprüche, bei dem der Verbindungsabschnitt (40) ein gelöteter Abschnitt an einer äußeren Leitung der Halbleitervorrichtungspackung ist, welche auf der genannten Schaltungskarte (2) montiert ist.

8. Vorrichtung zum Inspizieren eines Verbindungsabschnittes (40) zwischen einer Halbleitervorrichtung (1) und einer Schaltungskarte (2), welche in einem schmalen Spalt zwischen entsprechenden im allgemeinen flachen inneren Oberflächen der Schaltungskarte (2) und einer Packung der Vorrichtung (1) angeordnet ist, mit:

einer Beleuchtungseinrichtung (200, 201), die angeordnet ist, um die äußere Oberfläche der Schaltungskarte (2) mit einem Flutlicht zu beleuchten, so daß etwas Licht die Karte (2) durchdringt, um diffuses Licht innerhalb des Spaltes zu erzeugen, welches den Verbindungsabschnitt (40) beleuchtet und von einem Rand des Spaltes emittiert wird;

Ablenkungseinrichtungen (10), die angeordnet sind, um das durch den Rand des Spaltes emittierte Licht in einer Richtung in einem Winkel zu der Ebene des Spaltes abzulenken; und

Fokussiereinrichtungen (11), welche angeordnet sind, um das abgelenkte Licht, welches durch den Rand des Spaltes emittiert wurde, zu fokussieren, um ein Bild von dem oder jedem Objekt (40) zu erzeugen, zur Verwendung bei der Inspektion des Verbindungsabschnittes.

9. Vorrichtung nach Anspruch 8, bei der die genannte Ablenkeinrichtung (10) ein Prisma ist, das eine Ebene hat, welche das genannte emittierte Licht reflektieren kann.

10. Vorrichtung nach einem der Ansprüche 8 oder 9, bei der die genannte Fokussiereinrichtung (11) ein optisches Mikroskop ist.

11. Vorrichtung nach Anspruch 8, 9 oder 10, ferner mit zusätzlichen Ablenkeinrichtungen (15), um eine zusätzliche Ablenkung des genannten abgelenkten Lichtes zu liefern, um so den Blickwinkel des genannten Verbindungsabschnittes (40) zu ändern.

12. Vorrichtung nach Anspruch 11, bei dem die genannte zusätzliche Ablenkvorrichtung (15) umfaßt:

ein Prisma, welches ein Paar von Oberfläche hat, die den Weg des durch die genannte Ablenkeinrichtung (10) abgelenkten Lichtes schneiden, wobei die genannten jeweiligen Oberflächen einander zugewandt sind, mit einem vorbestimmten Winkel dazwischen; und

Einrichtungen (19) zum Rotieren des genannten Prismas um eine Achse, die im wesentlichen senkrecht zu der genannten inneren Oberfläche des genannten ersten Teiles (2) ist.

13. Vorrichtung nach einem der Ansprüche 8 bis 12, ferner mit einer Konvertereinrichtung (16) zum Konvertieren des genannten fokussierten Lichtes in elektrische Signale.

14. Vorrichtung nach Anspruch 13, bei der die genannte Konvertereinrichtung (16) eine Videokamera ist.

15. Vorrichtung nach einem der Ansprüche 8 bis 14, in Kombination mit einer Anordnung mit

der genannten Schaltungskarte (2) und einer darauf montierten Vorrichtung (1), welche einen schmalen Spalt zwischen ihren inneren Oberflächen davon begrenzen, und

einem Verbindungsabschnitt oder einer Vielzahl von Verbindungsabschnitten (40), die in dem schmalen Spalt angeordnet sind.

16. Vorrichtung nach Anspruch 15, bei der der oder jeder Verbindungsabschnitt (40) ein gelöteter Abschnitt von einer äußeren Leitung der Halbleiterpackung (1) ist, die auf der genannten Schaltungskarte (2) montiert ist.

17. Vorrichtung nach einem der Ansprüche 8 bis 16, bei der die genannte Beleuchtungseinrichtung (200, 201) eine breite Lichtquelle umfaßt, deren ausgestrahltes Licht eine Spektralverteilung hat, welche mit der spektralen Transmission der Schaltungskarte (2) übereinstimmt.

18. Vorrichtung nach Anspruch 17, bei der die genannte Beleuchtungseinrichtung (200, 201) eine Halogenlampe umfaßt.

## Revendications

1. Procédé d'inspection d'une partie de connexion (40) d'un dispositif à semi-conducteur (1) et d'une carte de circuit (2), placée dans un petit espace compris entre les surfaces internes respectives, plates de façon générale, de la carte (2) de circuit et d'un boîtier du dispositif (1), comprenant les étapes suivantes:

l'éclairement de la surface externe de la carte (2) de circuit par projection de lumière, afin qu'une certaine quantité de lumière traverse la carte (2) et forme de la lumière diffusée dans ledit espace, cette lumière éclairant la partie de connexion et étant émise par un bord de cet espace,

la déviation de la lumière émise par le bord de cet espace, en direction inclinée par rapport au plan de cet espace,

la focalisation de la lumière déviée émise par le bord de cet espace afin qu'une image de la partie de connexion soit formée, et

l'observation ou le traitement de l'image afin que la partie de connexion soit inspectée.

2. Procédé selon la revendication 1, dans lequel l'angle formé avec le plan de cet espace est pratiquement un angle droit.

3. Procédé selon l'une quelconque des revendications précédentes, dans lequel l'étape de focalisation comprend le grandissement optique de l'image.

4. Procédé selon l'une quelconque des revendications précédentes, dans lequel l'image est formée sur une surface photosensible d'un transducteur photoélectrique (16) capable de transmettre des signaux électriques correspondant à l'image.

5. Procédé selon l'une quelconque des revendications précédentes, comprenant en outre une étape de déviation supplémentaire de la lumière déviée.

6. Procédé selon l'une quelconque des revendications précédentes, comprenant en outre une étape de déplacement de la carte de circuit (2) et du dispositif (1) en translation en direction parallèle au bord de cet espace.

7. Procédé selon l'une quelconque des revendications précédentes, dans lequel la partie de connexion (40) est une partie soudée d'un fil conducteur externe du boîtier du dispositif à semi-conducteur, montée sur la carte de circuit (2).

8. Appareil d'inspection d'une partie de connexion (40) disposée entre un dispositif à semi-conducteur (1) et une carte de circuit (2) placée dans un petit espace compris entre des surfaces internes respectives, plates de façon générale, de la carte de circuit (2) et d'un boîtier du dispositif (1), comprenant:

un dispositif d'éclairement (200, 201) destiné à éclairer la surface externe de la carte de circuit (2) par projection de lumière, afin qu'une certaine quantité de lumière traverse la carte (2) et crée de ·la lumière diffusée dans ledit espace, cette lumière éclairant la partie de connexion (40) et étant émise par un bord de l'espace,

un dispositif déflecteur (10) destiné à dévier la lumière émise par le bord de cet espace, en direction inclinée par rapport au plan de cet espace, et

un dispositif de focalisation (11) destiné à focaliser la lumière déviée émise par le bord de cet espace afin qu'une image de l'objet ou de chaque objet (40) soit formée et puisse être utilisée pour l'inspection de la partie de connexion.

9. Appareil selon la revendication 8, dans lequel le dispositif déflecteur (10) est un prisme ayant une face plane capable de réfléchir la lumière émise.

10. Appareil selon la revendication 8 ou 9, dans lequel le dispositif de focalisation (11) est un microscope optique.

11. Appareil selon la revendication 8, 9 ou 10, comprenant en outre un dispositif déflecteur supplémentaire (15) destiné à assurer une déviation supplémentaire de la lumière déviée de manière que l'angle d'observation de la partie de connexion (40) soit modifié.

12. Appareil selon la revendication 11, dans lequel le dispositif déflecteur supplémentaire (15) comporte:

un prisme ayant deux surfaces recoupant le trajet de la lumière déviée par le dispositif déflecteur (10), les surfaces respectives étant opposées et formant un angle prédéterminé entre elles, et

un dispositif (19) destiné à faire tourner le prisme autour d'un axe sensiblement perpendiculaire à la surface interne du premier organe (2).

13. Appareil selon l'une quelconque des revendications 8 à 12, comprenant en outre un dispositif (16) de transformation de la lumière focalisée en signaux électriques.

14. Appareil selon la revendication 13, dans lequel le dispositif de conversion (16) est une caméra vidéo.

15. Appareil selon l'une quelconque des revendications 8 à 14, combiné à un ensemble qui comprend:

la carte de circuit (2) et le dispositif à semiconducteur (1) qui est monté sur elle et qui délimite le petit espace entre leurs surfaces internes respectives, et

une partie de connexion ou plusieurs parties de connexion (40) placées dans le petit espace.

16. Appareil selon la revendication 15, dans lequel la partie de connexion (40) ou chaque partie de connexion est une partie soudée d'un fil conducteur externe du boîtier (1) de dispositif à semi-conducteur monté sur la carte de circuit (2).

17. Appareil selon l'une quelconque des revendications 8 à 16, dans lequel le dispositif d'éclairement (200, 201) comporte une source de lumière puissante dont la lumière émise a une répartition spectrale correspondant à celle de la carte de circuit (2).

18. Appareil selon la revendication 17, dans lequel le dispositif d'éclairement (200, 201) est une lampe à halogène.

## FIG.1 A

## FIG.1 B

FIG.2

1

40

2

~1.5mm

~5 mm

FIG.3A

FIG.3C

FIG.3B

FIG.4

FIG.5

## FIG.6 A

## FIG.6 B

EP 0 162 683 B1

FIG. 7 A

FIG. 7 B

7

# FIG. 8 A

# FIG. 8 B